## Europäisches Patentamt
## European Patent Office
## Office européen des brevets

(19)

(11) Veröffentlichungsnummer: **0 053 332**
**B1**

(12) # EUROPÄISCHE PATENTSCHRIFT

(45) Veröffentlichungstag der Patentschrift:
08.08.84

(51) Int. Cl.³: **G 02 C 5/12**

(21) Anmeldenummer: 81109795.5

(22) Anmeldetag: 20.11.81

(54) **Halterung für Stegplättchen.**

(30) Priorität: 27.11.80 DE 3044615

(43) Veröffentlichungstag der Anmeldung:
09.06.82 Patentblatt 82/23

(45) Bekanntmachung des Hinweises auf die Patenterteilung:
08.08.84 Patentblatt 84/32

(84) Benannte Vertragsstaaten:
**AT DE FR GB IT NL**

(56) Entgegenhaltungen:
**FR - A - 2 369 582**
**GB - A - 799 155**
**US - A - 2 643 580**
**US - A - 3 476 468**

(73) Patentinhaber: **Speer, Herbert, Weberstrasse 48,
D-7531 Eisingen (DE)**

(72) Erfinder: **Speer, Herbert, Weberstrasse 48,
D-7531 Eisingen (DE)**

(74) Vertreter: **Hubbuch, Helmut, Dipl.-Ing et al,
Patentanwälte Dr. Rudolf Bauer Dipl.-Ing. Helmut
Hubbuch Dipl.-Phys. Ulrich Twelmeier Westliche
Karl-Friedrich-Strasse 29-31, D-7530 Pforzheim (DE)**

## Beschreibung

Die Erfindung bezieht sich auf eine Halterung für Stegplättchen an Metallbrillengestellen, bestehend aus einem Stutzen mit Verankerungsfuß für das Stegplättchen, welcher mit dem Stegarm verrastbar ist.

Es sind neben Schraubverbindungen zwischen Stutzen am Stegplättchen und Stegarmen an Metallbrillengestellen auch rastbare Verbindungen bekannt. So gibt es beispielsweise Stutzen, welche federnd in einen Rahmen am Stegarm einrasten, und es sind auch druckknopfartige Rastverbindungen bekannt. Die ersterwähnte Ausführung erfordert das Anlöten des kleinen Federrahmens am Stegarm, was umständlich und schwierig ist, und bei beiden Ausführungen müssen ein oder beide Seiten der Verbindung aus Federmaterial gebildet sein, welche beiden Teile gleichzeitig die bewegliche Halteverbindung ergeben, wàs Material- und Außenformprobleme mit sich bringt.

Es ist nun Aufgabe der Erfindung, eine Rastverbindung zu schaffen, bei welcher die notwendige Seitenbeweglichkeit gegeben ist und welche vor allem aus gieß- oder spritzbarem Metall (Druckgußverfahren) in rationeller Weise gefertigt werden kann, wobei ein gesondert einsetz- und entnehmbares Federteil der lösbaren Rastverbindung dient.

Die Halterung für Stegplättchen nach dem Oberbegriff des Anspruchs 1 kennzeichnet sich hierzu gemäß der Erfindung dadurch, daß der Stutzen eine sackartige Ausnehmung besitzt, durch welche ein Quersteg reicht, über den ein Federbügel zum Verschluß der Ausnehmung steckbar ist, und daß eine Seitenbohrung am Stutzen die Ausnehmung unter dem Quersteg kreuzt, welche Seitenbohrung zum Einstecken eines Stegarmendes mit Seiteneinbuchtungen dient, an welchen der Federbügel einrastet. Hiermit lassen sich der Verbindungsstutzen aus Guß- oder Spritzmaterial und der Stegarm aus Stangenmaterial ohne Lötarbeit fertigen, während ein besonderer Federbügel dem Verschluß dient.

Weitere Einzelheiten der Halterung für Stegplättchen gemäß der Erfindung sind an Hand einer bevorzugten Ausführungsform beispielsweise in der Zeichnung dargestellt, und zwar zeigen

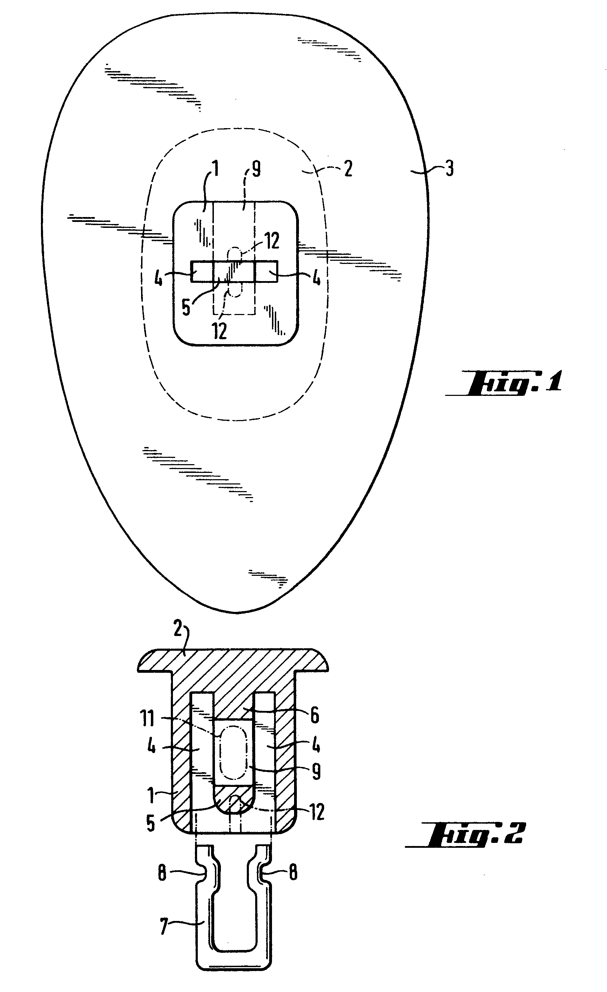

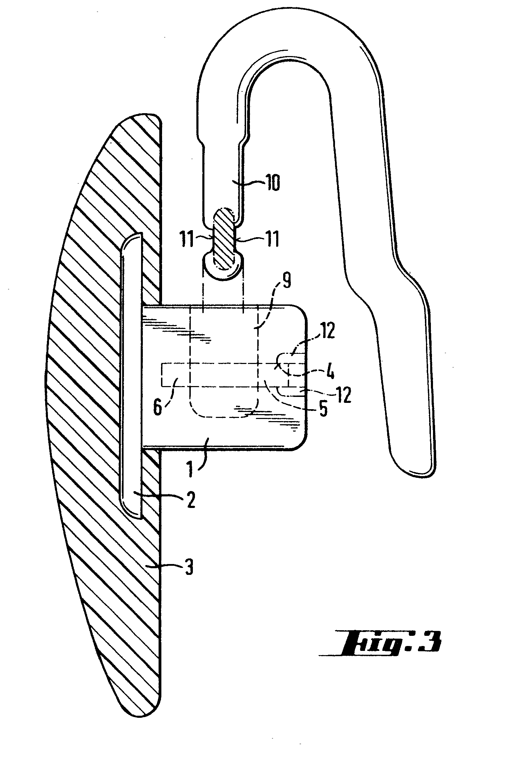

Fig. 1 und 2 die Rückansicht und den Querschnitt durch eine neue Stegplättchen-Halterung und

Fig. 3 die Seitenansicht dieser Halterung beim Einstecken des Stegarmendes, wobei der letztere um 90° verdreht ist.

Wie aus der Zeichnung ersichtlich, besteht die Halterung für Stegplättchen an Metallbrillengestellen aus einem Stutzen 1 mit Verankerungsfuß 2 im Stegplättchen 3, welcher Stutzen eine sackartige Ausnehmung 4 mit im Querschnitt schmaler Rechteckform besitzt. In dieser Ausnehmung 4˙ist ein zurückgesetzter Quersteg 5 und über dem Boden verlaufend ein weiterer Quersteg 6 angeordnet, so daß eine U-Form entsteht zum Einbringen eines entsprechenden Federbügels 7, welcher mittels Rastnocken 8 beidseits zwischen die beiden Stege 5 und 6 zum Verschluß greift.

Daneben besitzt der Stutzen 1 eine sackartige Seitenbohrung 9 mit Oval- oder Rundquerschnitt, welche die Ausnehmung 4 zwischen den Querstegen 5 und 6 kreuzt und parallel zu denselben verläuft. Diese Seitenbohrung 9 dient zum Einstecken des ovalen oder runden Stegarmendes 10 mit Seiteneinbuchtungen 11, in welche sodann die Rastnocken 8 des Federbügels 7 rastend eingreifen. Zur Lösung dieser Rastverbindung können Einstiche 12 zum Hintergreifen des Federbügels 7 vorgesehen sein, wie dies strichpunktiert in der Zeichnung dargestellt ist. Somit kann der Stutzen 1 mit Verankerungsfuß 2 in rationeller Weise in Metall- oder Spritzguß gefertigt und der Stegarm 10 aus Stangen- oder Bandmaterial gepreßt werden, während nur der einbringbare Federbügel 7 aus Federmaterial zu fertigen ist, so daß die Einzelteile aus ihrer Aufgabe entsprechendem Material bestehen.

## Patentansprüche

1. Halterung für Stegplättchen an Metallbrillengestellen, bestehend aus einem Stutzen mit Verankerungsfuß für das Stegplättchen, welcher mit dem Stegarm verrastbar ist, dadurch gekennzeichnet, daß der Stutzen (1) eine sackartige Ausnehmung (4) besitzt, durch welche ein Quersteg (5) reicht, über den ein Federbügel (7) zum Verschluß der Ausnehmung (4) steckbar ist, und daß eine Seitenbohrung (9) am Stutzen (1) die Ausnehmung (4) unter dem Quersteg (5) kreuzt, welche Seitenbohrung zum Einstecken eines Stegarmendes (10) mit Seiteneinbuchtungen (11) dient, an welchen der Federbügel einrastet.

2. Halterung für Stegplättchen nach Anspruch 1, dadurch gekennzeichnet, daß die sackartige Ausnehmung (4) am Stutzen (1) im Querschnitt eine schmale Rechteckform besitzt mit gegenüber dem Öffnungsende zurückgesetztem Quersteg (5) und mit über dem Boden verlaufenden weiteren Quersteg (6), so daß eine U-Form zum Einbringen des angepaßten Federbügels (7) entsteht, welcher mit Rastnocken (8) zwischen die beiden Stege (5, 6) greift.

3. Halterung nach Anspruch 2, dadurch gekennzeichnet, daß die Seitenbohrung (9) eine Sackbohrung mit Oval- oder Rundquerschnitt ist, die sich zwischen den Querstegen (5, 6) parallel zu denselben erstreckt und zum Einstecken des im Querschnitt ovalen oder runden Stegarmendes (10) mit Seiteneinbuchtungen (11) dient.

4. Halterung nach einem der Ansprüche 1 bis 3, dadurch gekennzeichnet, daß der Federbügel (7) aus einem federnden, im Querschnitt flachen oder runden U-Stück besteht mit Rastnocken (8), welche bei Rastverschluß quer zu den Seiteneinbuchtungen (11) vom Stegarmende (10) liegen und in diese rastend eingreifen.

5. Halterung nach einem der Ansprüche 1 bis 4, dadurch gekennzeichnet, daß zum Lösen der Rastverbindung am Stutzen (1) Einstiche (12) zum Hintergreifen des Federbügels (7) vorgesehen sind.

**Claims**

1. Mounting support for bridge lamina on metal spectacleframes, consisting of a connecting piece with anchoring stem for the bridge lamina, which can be arrested with the bridge arm, characterized by the fact, that, the connecting piece (1) has a bag-shaped hollow (4), through which a cross bridge (5) leads and where, above the latter, a spring bow (7) can be attached for closing the hollow (4); and that a side passage (9) on the connecting piece (1) crosses the hollow (4) below the cross bridge (5) which (side passage) serves for putting-in the end piece of the bridge arm (10) with side bays, where, on the latter, the spring bow clicks into place.

2. Mounting support for bridge lamina according to claim 1, characterized by the fact, that, the bag-shaped hollow (4) on the connecting piece (1) is, in cross-sectional view, shaped rectangularly, with a cross bridge (5), placed back with regard to the end of the opening, and with a further cross bridge (6), extending above the bottom, thus resulting in a U-shape for the attaching of the spring bow (7), made to measure, which grasps by means of arresting cams (8) between the two bridges (5, 6).

3. Mounting support according to claim 2, characterized by the fact, that, the side passage (9) is a bag-shaped passage with an oval-or round-shaped cross-section, which leads between the cross-bridges (5, 6) in a parallel position to them and which serves for the putting-in of the end piece of the bridge arm, with an oval-or round-shaped cross section, (10) and with side bays (11).

4. Mounting support according to one of the claims 1 to 3, characterized by the fact, that, the spring bow (7) is an elastic, in cross-section flat or round, U-shaped piece with arresting cams, which, at arresting process, are positioned diagonally to the side bays (11) of the end piece of the bridge arm (10) and grasp into them.

5. Mounting support according to one of the claims 1 to 4, characterized by the fact, that for releasing the clasp, there are provided on the connecting piece (1) recesses for the spring bow (7).

**Revendications**

1. Dispositif de serrage pour les lamettes à la traverse du châssis en métal de lunettes, consistant en une tubulure avec un pied d'ancrage pour la lamette, pied qui, à l'aide d'un arrêt de crans, peut être fixé au bras de la traverse; caractérisé par le fait que la tubulure (1) est dotée d'un creux de la forme d'un sac (4), par lequel peut passer une traverse transversale (5), sur laquelle peut être fixé un étrier de ressort (7) qui sert à fermer le creux (4), et par le fait qu'une forure latérale (9) à la tubulure (1) croise le creux (4) au-dessous de la traverse transversale (5), forure latérale qui sert à introduire un bout du bras de la traverse (10) qui est doté de creux latéraux (11) où l'étrier de ressort prend l'encoche.

2. Dispositif de serrage pour lamettes à la traverse d'après le droit défini sous 1, caractérisé par le fait que dans le profil transversal le creux de la forme d'un sac (4) à la tubulure (1) possède une forme rectangulaire, où par rapport au bout de l'ouverture une traverse transversale (5) est placée en arrière et avec une autre traverse transversale (6) qui passe au-dessus du fond, de sorte qu'il en résulte une forme en U qui sert à introduire l'étrier de ressort (7) adapté qui prend l'encoche entre les deux traverses (5, 6) avec des cames d'arrêt (8).

3. Dispositif de serrage d'après le droit défini sous 2, caractérisé par le fait que la forure latérale (9) est une forure de la forme d'un sac, avec un profil transversal circulaire ou oval qui s'étend entre les traverses (5, 6), parallèles à celles-ci, et qui sert à introduire le bout du bras de la lamette (11), dans le profil transversal oval ou circulaire et doté de creux latéraux (11).

4. Dispositif de serrage d'après l'un des droits définis sous 1 à 3, caractérisé par le fait que l'étrier de ressort (7) consiste en une pièce en U élastique, dans le profil transversal platte ou circulaire, avec des cames d'arrêt (8) qui en cas d'arrêt se trouvent en position transversale par rapport aux creux latéraux (11) au bout de bras de la traverse (10) et entrent dans celles-ci en prenant l'encoche.

5. Dispositif de serrage d'après l'un des droits définis sous 1 à 4, caractérisé par le fait que pour débloquer l'arrêt il sont prévues à la tubulure (1) des passes (12) à l'aide desquelles l'étrier de ressort (7) peut être déclenché.

*Fig: 1*

*Fig: 2*

5

Fig. 3